# DEMANDE DE BREVET EUROPEEN

(11) **EP 2 832 570 A1**
(43) Date de publication de la demande: **04.02.2015**
(21) Numéro de dépôt: 14179126.9
(22) Date de dépôt: 30.07.2014
(51) Int. Cl.: B60K 15/01, F16L 11/11, B60K 15/04

(54) **Tubulure de remplissage et véhicule automobile équipé d'une telle tubulure**

(30) Priorité: 01.08.2013 FR 1357681
(71) Demandeur: Nobel Plastiques, 78300 Poissy (FR)
(72) Inventeur: Milhas, Pierre, 51300 Vitry-le-François (FR)
(74) Mandataire: Decorchemont, Audrey Véronique Christèle

(57) **Abrégé**

L'invention concerne une tubulure de remplissage (1) comprenant au moins un tronçon annelé (2), la tubulure s'étendant longitudinalement selon un axe principal (X). Selon l'invention, le tronçon est asymétrique selon un plan comprenant l'axe principal.

L'invention concerne également un véhicule automobile équipé d'une telle tubulure.

## Description

L'invention concerne une tubulure de remplissage ainsi qu'un véhicule automobile équipé d'une telle tubulure.

### ARRIERE PLAN TECHNOLOGIQUE DE L'INVENTION

Une tubulure de remplissage permet de relier le réservoir d'une voiture à la tête de remplissage débouchant à l'extérieur de la carrosserie de la voiture. Le remplissage du réservoir est ainsi rendu possible par la coopération entre la tête de remplissage et le pistolet d'un distributeur de carburant d'une station-service, la tubulure de remplissage permettant de guider le carburant jusqu'au réservoir.

Les tubulures de remplissage annelées en matière plastique sont généralement favorisées puisqu'elles sont légères, d'un coût de fabrication peu élevé, et présentent de bonnes caractéristiques mécaniques. En particulier, ces tubulures présentent une très grande flexibilité lors des crashs tests. Ces tubulures sont par exemple fabriquées par soufflage ou par extrusion de tubes monocouches ou multicouches.

La présence d'annelures ralentit toutefois l'écoulement du carburant à l'intérieur d'une telle tubulure. La perte de charge provoquée par ce ralentissement entraîne un différentiel de pression à l'intérieur de la tubulure qui peut elle-même provoquer le déclenchement de la sécurité du pistolet du distributeur et ce alors que le réservoir n'est pas nécessairement plein.

Pour pallier à cet inconvénient, il a été envisagé d'augmenter significativement le diamètre de la tubulure de remplissage de plusieurs millimètres.

Cette solution n'est toutefois pas satisfaisante car la tubulure de remplissage est alors encombrante. En outre, la surface d'échange entre la tubulure de remplissage et le carburant s'avère plus importante ce qui augmente la perméabilité de la tubulure de remplissage au carburant.

### OBJET DE L'INVENTION

Un but de l'invention est de proposer une tubulure de remplissage qui obvie au moins en partie aux inconvénients précités.

### BREVE DESCRIPTION DE L'INVENTION

En vue de la réalisation de ce but, on propose une tubulure de remplissage comprenant au moins un tronçon annelé, la tubulure s'étendant longitudinalement selon un axe principal.

Selon l'invention, le tronçon est asymétrique selon un plan comprenant l'axe principal.

Ainsi, l'asymétrie du tronçon annelé permet à la tubulure de posséder des annelures lui assurant de bonnes caractéristiques mécaniques tout en prévoyant que les annelures ne freinent pas outre mesure l'écoulement du carburant à l'intérieur de ladite tubulure. Il a en effet été constaté que la forme particulière du tronçon annelé permettait de limiter le ralentissement de l'écoulement du carburant au niveau des annelures.

En outre, cette asymétrie n'augmente que légèrement le volume de la tubulure. L'invention est ainsi implantable dans tout type de véhicules automobiles.

Par ailleurs, les pistolets des distributeurs de carburant ont une forme normalisée qui dépend du type de carburant distribué (essence, diesel ...) et du type de véhicule concerné (voiture ou poids lourds). De même, les têtes de remplissage ont une forme normalisée qui dépend du constructeur automobile et du type de carburant consommé par le véhicule concerné. L'invention permet de façon avantageuse de favoriser l'écoulement du carburant dans la tubulure quel que soit le type de pistolet ou de tête de réservoir concerné et donc quel que soit le type de carburant et le débit de carburant reçu dans la tubulure. Grâce à l'invention, il n'est pas nécessaire de modifier les pistolets et têtes de remplissage normalisés et standardisés. L'invention est ainsi implantable dans tout véhicule déjà existant.

De plus, il a été constaté que l'asymétrie du tronçon annelé permettait d'éliminer certaines turbulences dans l'écoulement du carburant à l'intérieur de la tubulure. Le volume sonore est ainsi moins important lorsqu'un utilisateur remplit son réservoir avec une tubulure selon l'invention qu'avec une tubulure de l'art antérieur.

Bien sûr, pour toute la présente demande, lorsque l'on indique que la tubulure s'étend longitudinalement selon l'axe principal c'est que l'on se place dans le cas de figure où la tubulure est en position de repos (par opposition à la position de service où la tubulure est éventuellement déformée au niveau de son tronçon annelé).

Pour toute la présente demande, par « annelure », on entend l'ensemble des altérations de la géométrie du tronçon qui ont été formées volontairement pour autoriser une certaine flexibilité du tronçon. Ces altérations différencient ainsi un tronçon annelé d'un tronçon cylindrique lisse. Le terme « annelure » ne contraint donc pas la forme des altérations.

Pour toute la présente demande, par « section transversale », on entend la section du tronçon selon un plan de coupe ayant pour normale l'axe principal.

On propose également un véhicule automobile comportant un réservoir, une tête de remplissage débouchant à l'extérieur du véhicule et une tubulure de remplissage telle que précitée, la tubulure étant agencée de sorte à relier la tête de remplissage au réservoir.

### BREVE DESCRIPTION DES DESSINS

L'invention sera mieux comprise à la lumière de la description qui suit de modes de réalisation non limitatifs de l'invention en référence aux figures ci-jointes, parmi lesquelles :
- la figure 1 est une vue en perspective d'une tubulure de remplissage selon un premier mode de réalisation de l'invention ;
- la figure 2 est une vue de côté d'une tubulure de remplissage selon une variante du premier mode de réalisation de l'invention ;
- la figure 3 est une vue en perspective de la tubulure illustrée à la figure 2 ;
- la figure 4 est une vue en perspective d'une tubulure de remplissage selon un deuxième mode de réalisation de l'invention ;
- la figure 5 est une vue de côté d'une tubulure de remplissage selon un troisième mode de réalisation de l'invention ;
- la figure 6 est un vue schématique d'une partie d'un véhicule automobile comprenant la tubulure illustrée à la figure 1.

### DESCRIPTION DETAILLEE DE L'INVENTION

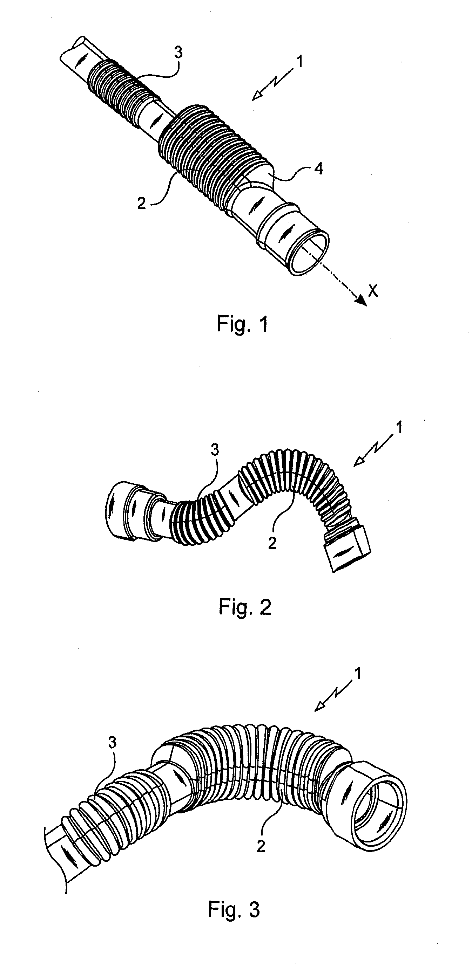

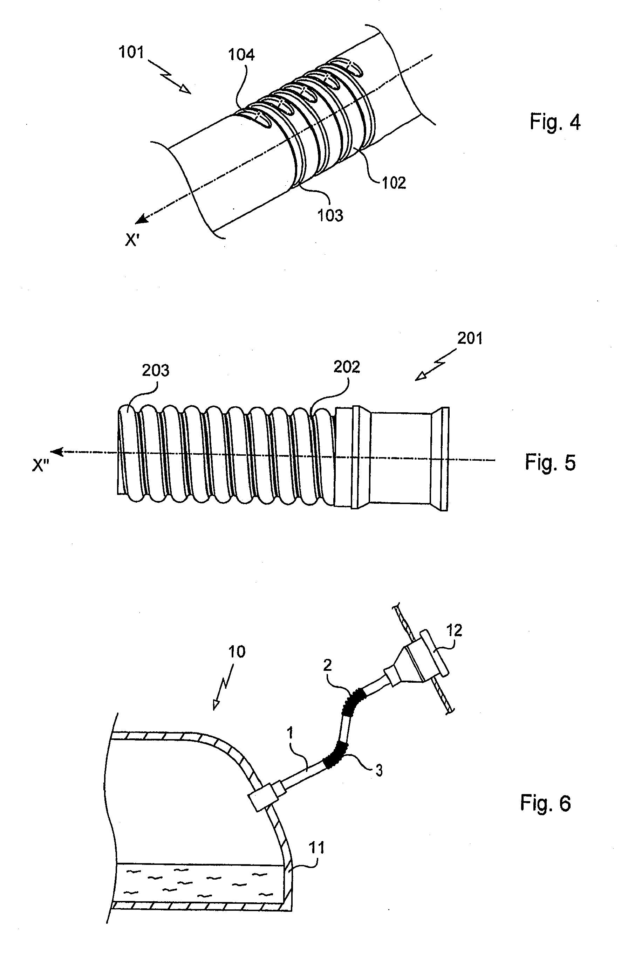

En référence aux figures 1 et 6, une première tubulure de remplissage 1 selon un premier mode de réalisation de l'invention est ici implantée dans une voiture 10 comprenant un moteur à combustion interne.

La voiture 10 comporte un réservoir 11 et une tête de remplissage 12 débouchant à l'extérieur de la voiture 10. La première tubulure 1 est agencée de sorte à relier la tête de remplissage 12 au réservoir 11. La tête de remplissage 12 est destinée à coopérer avec un pistolet d'un distributeur de carburant, la première tubulure de remplissage 1 permettant alors de guider le carburant depuis la tête de remplissage 12 jusqu'au réservoir 11.

La première tubulure 1 s'étend longitudinalement selon un axe principal X lorsqu'elle est en position de repos (comme illustré à la figure 1). La première tubulure 1 comporte ici deux tronçons annelés :
- un premier tronçon annelé 2 qui s'étend longitudinalement selon l'axe principal X et qui comporte une pluralité d'annelures, et
- un deuxième tronçon annelé 3 qui s'étend longitudinalement selon l'axe principal X et qui comporte une pluralité d'annelures.

Toutes les annelures du premier tronçon annelé 2 et du deuxième tronçon annelé 3 s'étendent sur toute la circonférence du tronçon associé de sorte à entourer complétement le tronçon associé.

Selon l'invention, le premier tronçon annelé 2 est asymétrique selon un plan comprenant l'axe principal X. Plus précisément, le premier tronçon 2 est ici asymétrique selon l'axe principal X.

En l'occurrence ici toutes les annelures du premier tronçon 2 ont une section transversale de forme triangulaire.

Ainsi, les annelures du premier tronçon 2 délimitent un volume d'écoulement plus important d'un côté de la première tubulure 1 que de l'autre.

L'excroissance 4 ainsi formée, relativement au reste à de la première tubulure 1 qui est symétrique, permet de favoriser l'écoulement du carburant à l'intérieur de la première tubulure 1 en augmentant de façon localisée le volume de la première tubulure 1.

Ainsi, les annelures du premier tronçon 2 s'étendent les unes après les autres le long de l'axe principal X mais sont chacune radialement décalée du reste de la première tubulure 1 par rapport à l'axe principal X. Les annelures du premier tronçon 2 ne sont donc pas concentriques à l'axe principal X au contraire du reste de la première tubulure 1 comme le deuxième tronçon 3. Ceci permet de créer l'excroissance 4 qui autorise notamment une atténuation plus importante des turbulences dans l'écoulement du carburant à l'intérieur de la première tubulure 1 par rapport à des annelures concentriques à l'axe principal X comme les annelures du deuxième tronçon 3.Selon un mode de réalisation préféré, le premier tronçon annelé 2 est agencé au niveau d'une des extrémités de la première tubulure 1. De préférence, le premier tronçon annelé 2 est agencé au niveau de l'extrémité qui est connectée à la tête de remplissage 12.

L'excroissance 4 est ainsi localisée au plus près de la tête de remplissage 12 pour augmenter le volume d'écoulement en entrée de la première tubulure 1. Ceci permet d'optimiser encore davantage l'écoulement du carburant dans la première tubulure 1.

En variante, les annelures du premier tronçon 2 peuvent avoir une autre forme de section transversale non circulaire.

Ainsi, en référence aux figures 2 et 3, toutes les annelures du premier tronçon 2 ont une section transversale de forme oblongue.

En référence à la figure 4, une deuxième tubulure de remplissage 101 selon un deuxième mode de réalisation de l'invention comporte un tronçon annelé 102 qui comporte une pluralité d'annelures. La deuxième tubulure 101 s'étend longitudinalement selon un axe principal X'. Le tronçon annelé 102 comporte ici :
- des premières annelures 103 (dont une seule est numérotée ici) qui s'étendent sur toute la circonférence du tronçon 102, et
- des deuxièmes annelures 104 (dont une seule est numérotée ici) qui s'étendent sur la moitié seulement de la circonférence du tronçon 102.

De préférence, les premières annelures 103 et les deuxièmes annelures 104 sont agencées de sorte à être alternées le long du tronçon 102 suivant l'axe principal X' .

L'alternance des différents types d'annelures et la forme même des deuxièmes annelures 104 permettent d'éviter un trop grand ralentissement de l'écoulement du carburant dans le tronçon 102.

En référence à la figure 5, une troisième tubulure de remplissage 201 selon un troisième mode de réalisation de l'invention s'étend longitudinalement le long d'un axe principal X'' et comporte un tronçon annelé 202 qui comporte une unique annelure 203 s'étendant hélicoïdalement le long du tronçon.

L'annelage hélicoïdal 203 du tronçon 202 permet de guider l'écoulement du carburant le long du tronçon 202 ce qui limite la perte de charge dudit écoulement à l'intérieur de la tubulure 201.

Les différentes tubulures décrites ici sont par exemple en matière plastique. Lesdites tubulures peuvent ainsi être fabriquées par des procédés bien connus de l'art antérieur comme par extrusion de tubes multicouches. Par exemple, des coquilles de formes appropriées sont appliquées sur le matériau sortant de la filière du dispositif d'extrusion afin de former la ou les annelures de la tubulure selon l'un des modes de réalisation de l'invention.

Bien entendu l'invention n'est pas limitée aux modes de réalisation décrits et on peut y apporter des variantes de réalisation sans sortir du cadre de l'invention tel que défini par les revendications.

En particulier, bien qu'ici il ait été question d'implanter la première tubulure dans un véhicule automobile, on pourra bien entendu implanter une tubulure selon n'importe lequel des modes de réalisation de l'invention dans un véhicule automobile. Bien qu'ici on ait décrit une voiture à moteur à combustion interne, une tubulure selon l'invention pourra être implantée dans d'autres véhicules automobiles comme dans une voiture hybride.

Bien qu'ici chaque mode de réalisation ait été décrit de façon séparée, l'invention concerne bien entendu une tubulure issue de la combinaison de ces différents modes de réalisation. Par exemple, une tubulure selon l'invention pourra comprendre un premier tronçon annelé selon le premier mode de réalisation et un deuxième tronçon annelé selon le deuxième mode de réalisation de l'invention ou encore comprendre un tronçon annelé selon le troisième mode de réalisation de l'invention, l'annelure étant cependant de section transversale non circulaire comme dans le premier mode de réalisation de l'invention.

Bien qu'ici la tête de remplissage et la tubulure soient décrites comme étant deux pièces distinctes, la tête de remplissage et la tubulure selon l'invention pourront former une unique pièce.

La tubulure pourra comporter un nombre différent de tronçons annelés que ceux décrits. Un tronçon annelé, plusieurs tronçons annelés ou la totalité des tronçons annelés de la tubulure pourront être asymétriques selon un plan comprenant l'axe principal de la tubulure. De préférence, lesdits tronçons annelés asymétriques seront agencés au niveau de l'extrémité de la tubulure qui fait face à la tête de remplissage.

Bien que dans le deuxième mode de réalisation, une partie des annelures soient semi-circulaires, les annelures pourront entourer partiellement le tronçon sur une circonférence plus ou moins importante. En variante, au lieu que les annelures aient des circonférences différentes les unes des autres, les annelures pourront avoir des épaisseurs différentes les unes des autres.

Bien que dans le troisième mode de réalisation, l'annelure ait un pas régulier, l'annelure pourra présenter un pas irrégulier permettant d'espacer ou de rapprocher les zones soufflées des zones lisses du tronçon.

## Revendications

1. Tubulure de remplissage (1 ; 101 ; 201) comprenant au moins un tronçon annelé (2; 102 ; 202), la tubulure s'étendant longitudinalement selon un axe principal (X, X', X''), la tubulure étant **caractérisée en ce que** le tronçon est asymétrique selon un plan comprenant l'axe principal.

2. Tubulure selon la revendication 1, dans laquelle le tronçon (2; 102) comporte une pluralité d'annelures (103, 104).

3. Tubulure selon la revendication 2, dans laquelle le tronçon est asymétrique selon l'axe principal.

4. Tubulure selon la revendication 3, dans laquelle au moins une annelure du tronçon a une section transversale non circulaire.

5. Tubulure selon la revendication 4, dans laquelle ladite annelure a une section transversale de forme oblongue.

6. Tubulure selon la revendication 4, dans laquelle ladite annelure a une section transversale de forme triangulaire.

7. Tubulure selon la revendication 2, dans laquelle les annelures s'étendent sur toute la circonférence du tronçon (2 ; 103).

8. Tubulure selon la revendication 2, dans laquelle les annelures (103, 104) sont différentes les unes des autres.

9. Tubulure selon la revendication 2, dans laquelle le tronçon (101) est annelé de sorte qu'au moins une annelure (104) n'entoure que partiellement le tronçon.

10. Tubulure selon la revendication 1, dans laquelle le tronçon (201) comporte une annelure (203) s'étendant hélicoïdalement.

11. Tubulure selon la revendication 1, dans laquelle le tronçon est agencé à une extrémité de la tubulure.

12. Véhicule automobile (10) comportant un réservoir (11), une tête de remplissage (12) débouchant à l'extérieur du véhicule et une tubulure de remplissage selon l'une des revendications précédentes, la tubulure étant agencée de sorte à relier la tête de remplissage au réservoir.

13. Véhicule selon la revendication 12, dans lequel le tronçon annelé est agencé à une extrémité de la tubulure, ladite extrémité étant connectée à la tête de remplissage (12).
